# EUROPEAN PATENT SPECIFICATION

(11) **EP 1 561 636 B1**
(45) Date of publication and mention of the grant of the patent: **09.05.2007**
(21) Application number: 05447016.6
(22) Date of filing: 03.02.2005
(51) Int. Cl.: B60P 1/46, B60P 1/44

(54) **Safety railing**
Sicherheitsbügel
Barre de sécurité

(30) Priority: 04.02.2004 BE 200400054
(43) Date of publication of application: 10.08.2005
(73) Proprietor: Nuyts, Henri, 2300 Turnhout (BE)
(72) Inventor: Nuyts, Henri, 2300 Turnhout (BE)

(56) References cited:
- EP-A- 0 885 770
- DE-A1- 4 004 960
- DE-A1- 4 016 789
- DE-U1- 7 809 142
- FR-A- 2 602 191
- US-A- 4 198 188

## Description

A taillift like a vertical taillift or columnlift on a truck is already well-known. Executions are known whereby the loading platform is provided with safety railings. The side railings are mostly hinging on the loading platform in closed position.The backside of the loading platform gives mostly the entry on the loading platform. Railing systems are well-knownd like drop-in-gates, hinging gates and barriers as in the US patent 4198188, the doc. DE 78 09 142 U1, the doc.FR 2 602 191 A, the doc.DE 40 04 960 A1, the doc. DE 40 16 789 A1, and the telescopic hinging barriers like in the EP 0 885770 A1.

This executions are difficult to use, has always to be manipulated and are often blocking the entry on the loading platform or is an obstacle for other road-users. This invention is claiming the solution for this problem to provide the loading platform with a barrier who is in open position of the loading platform in position on the backside of said loading platform used as a horizontal safety barrier and in an other position moved parallel to a higher position to give entry on the loading platform, supported by two arms on both side connected at right angle, which arms are on their other end connected to a lifting part of the tail lift via hinges who are situated more to the frontside (side of the truck).

In combination with parallel foldable side-gates and supports is given the possibility that the safety railing has not to be demounted and is folding away automatic by the closing of the loading platform. Further claim is given the possibility that said safety railing is folding away in a space outside the loading space of the truck or van.

### Detailed description of the invention :

A tail lift 1 such as a vertical tail lift such as a column lift, wich is mounted on a body of a vehicle such as a truck, be composed of a fixed part of which two vertical columns 14 are situated on both sides of a entry-opening 10 to the said body, and further provided with a lifting part including two slides 9 and a loading platform 2 which loading platform 2 on the frontside (side of the body) 21, and in one axis hinging is fixed on both said slides 9, and each of said slides 9 can be moved up and down through and/or along a respectively said column 14, whereby said loading platform 2 rotating in said axis by means of hydraulic cylinders,can be moved from vertical/closed transport position vertical positioned against the said entery-opening 10 of the said body, to the direction of an almost horizontal/open loading position folding open on the outside of the said body and vice-versa; and whereby the loading platform 2 view in open position, on the backside 22, in other words "the opposite/parallel side of said frontside 21", has a platform border 15 on which side and parallel on this 15, at least in open position of the loading platform 2, a safety railing is provided, in a way that said safety railing is a upside movable safety-barrier 4 be composed of a barrier 5 which is on his both ends connected with a supporting arm 7, and whereby said arms 7, from upside view on the open loading platform 2, are situated parallel on and near to the respectively sides of the loading platform 2 at right angles on said barrier 5, and whereby said arms 7 on the other end as their connection with the said barrier 5, are connected, hinging via hinges 8 , more to the frontside 21 of the loading platform 2 as the position of the said barrier 5, on the said lifting part of the tail lift 1, whereby said barrier 4, in closed vertical position of the loading platform 2, is situated near to the loading platform 2 and in open position of the loading platform 2 at least in one position can be hold and/or supported at least by one support 12, whereby at least in one position the barrier 5 can be used as a safety-barrier or balustrade and in at least one other position can be hold in a higher position to give entry on the loading platform for goods and standing up persons 2.

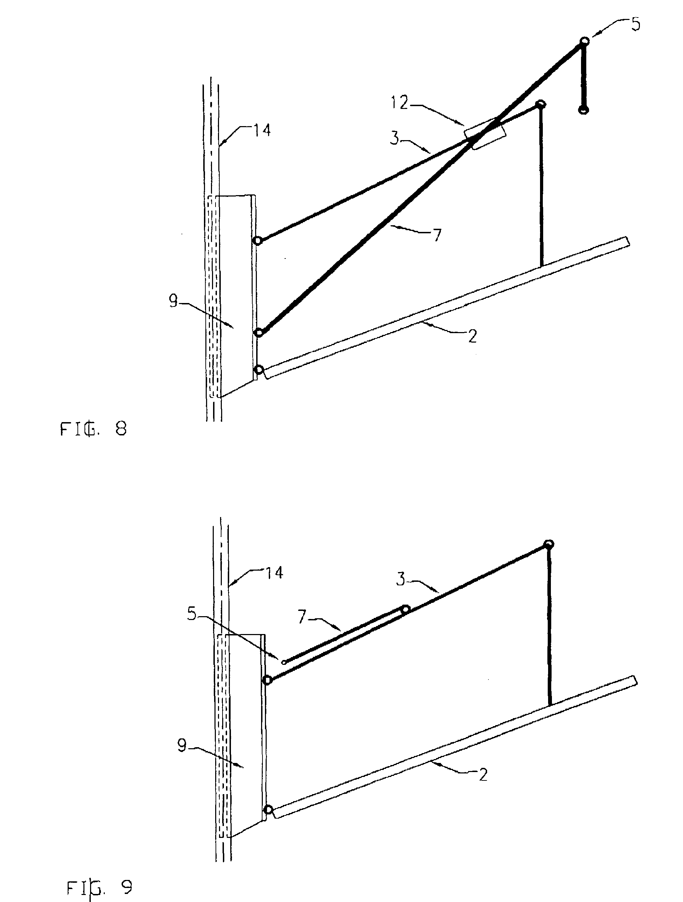

Further elements in the invention are sidegates 3 on both sides of the loadingplatform 2, whereby the side barriers 23 of the said sidegates 3, during the closing of the loadingplatform 2, are folding away almost parallel on and in direction to the loadingplatform 2 and parallel on each other, hinging in their connection with her upstanding pillars (24) and/or with her connected slide 9, upto almost parallel position on their respectively column 14, see FIG 8 and 9.

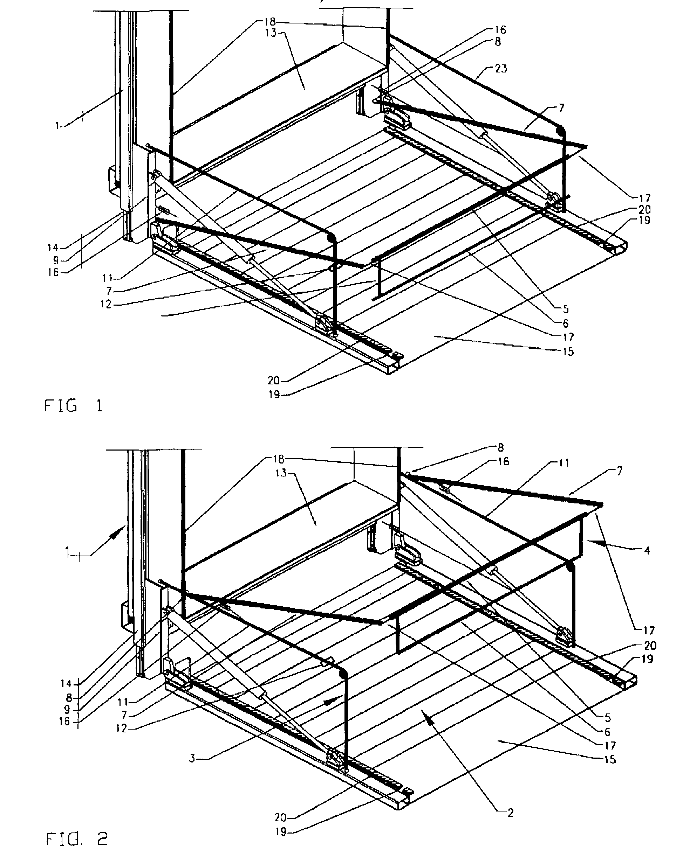

A further element in the invention is that at least one of said arms 7 is hold or supported in at least one support 12, at least on one sidegate 3, in which supports 12 the respectively arms 7 can be moved in their length axis in respect to the respectively sidegate 3, whereby said arms 7 in the closing of said loading platform 2 by this folding movement of the said sidegates 3, can be positioned close to said loading platform 2, see FIG 1 and 8.

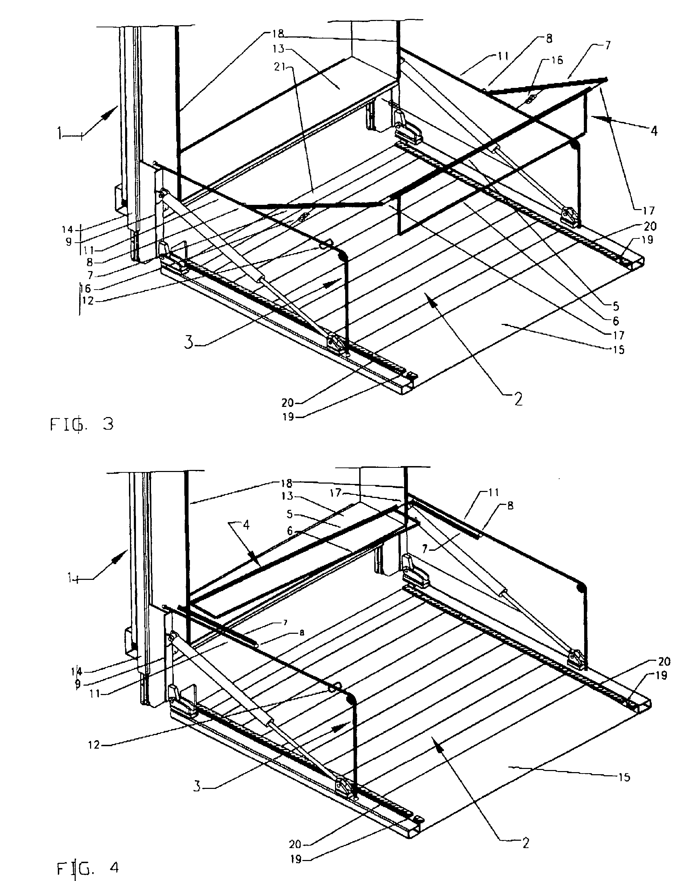

The invention gives the possibilitys that the arms 7 are connected via hinges 8 to said lifting part of the tail lift 1, such as the loading platform 2, and/or the respectively slides 9, and/or the respectively side gates 3 or their respectively upstanding pillars, see FIG. 1-4, 8 and 9.

In a further development gives the invention the possibility that at least one spring 16 is mounted between at least one arm 7 and an other part of said lifting part, in a way that the moving radius of said safety-barrier 4 is supported in at , least one moving direction, see FIG 1 and 2.

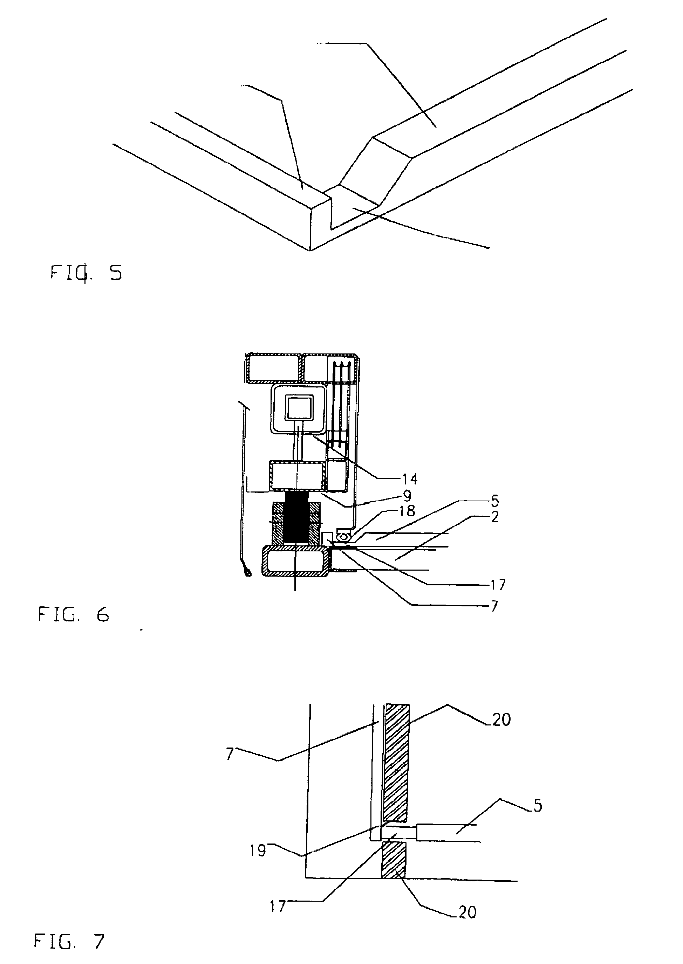

Also gives the invention the possibility that the arms 7 of said safety-barrier 4 in both hinges 8 are rotating about 180°, whereby said barrier 5 in functional position is situated on the side of said platform border 15 and whereby said barrier 5 for the closing movement of the loading platform 2 can be moved in direction of said frontside 21, on the side of said columns, and frontside 21 of the loading platform 2, see FIG 4 and 9. In a further development of the invention, there is the possibility that said safety-barrier 4 has a knee-barrier 6 situated parallel on said barrier 5, which knee-barrier 6 can be moved in a radius around said barrier 5 from transport position to functional position, see FIG . 1,2,3 and 8. And further provides the invention in the advantage that around said entry-opening 10 sealings 18 are provided against which the loading platform 2 is sealed in the closed position, whereby the arms 7 of said safety-barriers 4) in view on said entry-opening 10, are situated outside said sealings 18 around said entry-opening 10, and said barrier 5 is situated inside said sealings 18 around said entry-opening 10, whereby the parts of said safety-barrier 4, which are passing said sealings 18, has a shape and/or a narrow 17 to be no obstacle for said sealings 18, and whereby said narrows 17 are fitting in corresponding spaces 19 in or on the loading platform 2 in the area where the loading platform 2 is touching said sealings 18. see FIG 5,6 and 7. To give the possibility to create this spaces, the loading platform in the touching area with the sealings 18 can be provided by protrusion like an metal flat 20, see FIG 1,2,3 and 4 and further that said platform border 15 is a leading edge and whereby the barrier 5 is connected with the other parts of the safety-barrier 4, in a way that in transport situation said barrier 5 is situated in the space given by said leading edge in the thickness of said loading platform 2.

## Claims

1. A taillift (1) such as a vertical tail lift, such as a columnlift, wich is mounted an a body of a vehicle such as a truck, be composed of a fixed part of which two vertical columns (14) are situated on both sides of an entry-opening (10) to the said body, and futher provided with a lifting part including two slides (9) and a loading platform (2) which loading platform (2) on the frontside, side of the body in open position (21), and in one axis hinging is fixed on both said slides 9), whereby each of said slides (9) can be moved up and down through and/or along a respectively said column (14), whereby said loading platform (2) rotating in said axis by means of at least one hydraulic cylinder, can be moved from vertical/closed transport position vertical positioned against the said entery-opening (10) of the said body, to the direction of an almost horizontal/open loading position folding open on the outside of the said body and vice-versa, whereby the loading platform (2) has side gates (3) on both sides of the loading platform (2), and whereby the loading platform (2), view in open position, has a platform border (15) on the backside, in other words the opposite/parallel side of said frontside (21), on which side (15) and parallel on this (15), at least in open position of the loading platform (2), a safety railing is provided, whereby that said safety railing is a upside movable safety-barrier (4) be composed of a barrier (5) which is on his both ends connected with a supporting arm (7), and whereby said arms (7), from upside view on the open loading platform (2), are situated parallel on and near to the respectively sides of the loading platform (2) at right angles on said barrier (5), and whereby said arms (7) on the other end as their connection with the said barrier (5) are connected via hinges (8) and more to the frontside (21) of the loading platform (2) as the position of the said barrier (5), on the said lifting part of the tail lift (1), such as on the loading platform (2), and/or on the respectively slides (9), and/or on the respectively side gates (3) whereby said barrier (5), in closed vertical position of the loading platform (2), is situated near to the loading platform (2) and in open position of the loading platform (2) at least in one position can be bold as a safety-barrier or balustrade and in at least one other position can be hold in a higher position to give entry on the loading platform for goods and standing up persons(2), **characterised in** which that the side barriers (23) of the said side gates (3), during the closing of the loading platform (2), are folding away almost parallel on and in direction to the loading platform (2) and parallel on each other (23), hinging in their connection with her upstanding pillars and/or with her connected slide (9), upto almost parallel position on their respectively column (14), and whereby at least one of said arms (7) is hold or supported in at least one support (12), at least on one sidegate (3), whereby said arms (7) in the closing of said loading platform (2) by this folding movement of the said sidegates (3), can be positioned close to said loading platform (2)

2. A tail lift (1) as claimed in claims 1, in which supports (12) of the respectively arms (7) can be moved in their length axis in respect to the respectively sidegates (3),

3. A tail lift (1) as claimed in any one of the preceding claims in which the arms (7) of said safety-barrier (4) in both hinges (8) are rotating about 80°, whereby said barrier (5) in functional position is situated on the side of said platform border (15) and whereby said barrier (5) for the closing movement of the loading platform (2) can be moved in direction of said frontside (21), on the side of said columns, and frontside (21) of the loading platform (2).

4. A tail lift (1) as claimed in any one of the preceding claims in which that said safety-barrier (4) has a knee-barrier (6) situated parallel on said barrier (5), which knee-barrier (6) can be moved in a radius around said barrier (5) from transport position to functional position.

5. A tail lift (1) as claimed in any one of the preceding claims in which that around said entry-opening(10) sealings (18) are provided against which the loading platform (2) is sealed in the closed position, whereby the arms (7) of said safety-barriers (4), in view on said entry-opening (10), are situated outside said sealings (18) around said entry-opening (10), and said barrier (5) is situated inside said sealings (18) around said entry-opening (10), whereby the parts of said safety-barrier (4), which are passing said sealings (18), has a shape and/or a narrow (17) to be no obstacle for said sealings (18), and whereby said narrows (17) are fitting in corresponding spaces (19) in or on the loading platform (2) in the area where the loading platform (2) is touching said sealings (18).

## Patentansprüche

1. Eine Hebebühne (1) wie eine senkrechte Hebebühne oder ein Säulenheber, welche an der Karosserie eines Fahrzeuges wie eines Lastkraftwagens montiert ist und aus einem starren Teil, an dem zwei senkrechte Säulen (14) sich auf beiden Seiten einer Eingangsöffnung (10) zu dieser Karosserie befinden, und aus einem Hubteil mit zwei Schiebern und einer Ladeplattform (2) besteht. Diese Ladeplattform (2) an der Front oder an der Flanke der Karosserie in offener Position (21) und an einem Drehgelenk ist an beiden Seiten der Schieber (9) befestigt, wobei jeder der Schieber (9) auf und ab bewegt werden kann durch und/oder entlang der Säule (14) und die Ladeplattform (2) sich in der erwähnten Achse dreht, und zwar mittels mindestens eines Hydraulikzylinders, und aus der senkrechten/geschlossenen Förderposition senkrecht gegen die erwähnte Eingangsöffnung (10) in der Karosserie bewegt werden kann, und zwar in die Richtung einer beinahe waagerechten/offenen Ladeposition, in der sie sich außen an der Karosserie auf- und zuklappt. Die Ladeplattform (2) weist Seitengeländer (3) auf beiden Seiten der Ladeplattform (2) auf, wobei die Ladeplattform (2), in offener Position betrachtet, einen Plattformrand (15) auf ihrer Hinterseite hat, mit anderen Worten auf der gegenüberliegenden/ parallelen Seite der betreffenden Front (21), an der Seite (15) und parallel zu dieser Seite (15) - zumindest in geöffneter Position der Ladeplattform (2) - ein Schutzgeländer vorgesehen ist. Dieses Schutzgeländer ist eine nach oben bewegliche Sicherheitsschranke (4), die aus einer Schranke (5), die an ihren beiden Enden mit einem Trägerarm (7) verbunden ist, besteht. Die beiden Arme (7) befinden sich, von der Oberseite der offenen Ladeplattform (2) betrachtet, parallel an und in der Nähe der jeweiligen Seiten der Ladeplattform (2) im rechten Winkel zur Schranke (5). Die beiden Arme (7) sind am gegenüberliegenden Ende ihrer Befestigung mit der Schranke (5) durch Scharniere (8) miteinander verbunden sind, und weiter zur Front (21) der Ladeplattform (2) als die Schranke (5) am Hubteil der Hebebühne (1), wie an besagter Ladeplattform (2) und/oder an den jeweiligen Schiebern (9) bzw. an den Seitengeländer (3), wobei die Schranke (5) sich in geschlossener senkrechter Position der Ladeplattform (2) in der Nähe der Ladeplattform (2) befindet und in geöffneter Position der Ladeplattform (2) zumindest in einer Position als Sicherheitsschranke oder als Schutzgeländer gehalten werden kann bzw. zumindest in einer anderen Position in einer höheren Position gehalten werden kann, um Zutritt zur Ladeplattform zwecks Verladen von Gütern oder als Standplatz für Personen (2) zu verschaffen. Kennzeichnend ist hierbei, dass die Seiten schranken (23) der Seitenpgeländer (3) beim Schließen der Ladeplattform (2) beinahe parallel wegklappen in die Richtung der Ladeplattform (2) und parallel zueinander (23), wobei sie in ihrer Verbindung mit deren aufrecht stehenden Pfeilern und/oder mit dem befestigten Schieber (9) in beinahe paralleler Position an ihrer jeweiligen Säule (14) hängen und wobei zumindest einer der Arme (7) von mindestens einer Stütze (12) sowie an mindestens einer Seitenpgeländer (3) gehalten oder gestützt wird, wobei die Arme (7) während des Schließens der Ladeplattform (2) durch die Klappbewegung der Seitenpgeländer (3) nahe bei der Ladeplattform (2) positioniert werden können.

2. Eine Hebebühne (1) wie unter dem Antrag 1, in der die Stützen (12) der Arme (7) in ihrer Längsachse gegenüber den jeweiligen Seitenpforten bewegt werden können.

3. Eine Hebebühne (1) wie unter einem der vorhergehenden Anträge, bei der die Arme (7) der Sicherheitsschranke (4) in beiden Drehgelenken (8) um 180° drehen, wobei die Schranke (5) in ihrer funktionsbereiten Position sich an der Seite des Plattformrandes (15) befindet und die Schranke (5) zum Schließen der Ladeplattform (2) in die Richtung der Front (21) auf der Seite der Säulen und der Front (21) der Ladeplattform (2) bewegt werden kann.

4. Eine Hebebühne (1) wie unter einem der vorhergehenden Anträge, bei der die besagte Sicherheitsschranke (4) eine Knieschranke (6) parallel zur Schranke (5) stehen. Fragliche Knieschranke (6) kann in einem Radius um die Schranke (5) von der Transport- in Funktionsposition bewegt werden.

5. Ein Hebebühne (1) wie unter einem der vorhergehenden Anträge, bei der rund um die Eingangsöffnung (10) Dichtungen (18) angebracht sind, gegen die die Ladeplattform (2) in geschlossener Position anliegt, wobei die Arme (7) der Sicherheitsschranken (4), an der Eingangsöffnung (10) betrachtet, sich außerhalb der Dichtungen (18) rund um die Eingangsöffnung (10) befinden, und die besagte Schranke (5) sich innerhalb der Dichtungen (18) rund um die Eingangsöffnung (10) befindet, wobei die Teile der Sicherheitsschranke (4), die besagte Dichtungen (18) passieren, eine Form und/oder eine Breite (17) aufweisen, die für die betreffenden Dichtungen (18) kein Hindernis darstellen, und wobei die Engstellen (17) in die entsprechenden Räume (19) in oder an der Ladeplattform (2) in dem Bereich, in dem die Ladeplattform (2) die Dichtung (18) berührt, hineinpassen.

## Revendications

1. Un hayon élévateur (1) tel qu'un hayon élévateur vertical, tel qu'un élévateur à colonne, qui est monté sur la carrosserie d'un véhicule tel qu'un camion, composé d'une partie fixe dont deux colonnes verticales (14) sont situées sur les deux côtés d'une ouverture d'entrée (10) dudit carrosserie , et en outre pourvu d'une partie d'élévation incluant deux glissières (9) et une plate-forme de chargement (2) laquelle plate-forme de chargement (2) sur le côté avant, côté de la carrosserie en position ouverte (21), et dans un charnière à axe est fixée sur les deux dites glissières (9), ainsi que chacune des dites glissières (9) peut être bougée vers le haut et vers le bas à travers et/ou le long d'une dite colonne respective (14), par laquelle opération ladite plate-forme de chargement (2) en rotation dans ledit axe au moyen d'au moins un cylindre hydraulique, peut être bougée de la position de transport verticale/fermée verticalement positionné contre ladite ouverture d'entrée (10) dudit carrosserie, dans la direction d'une position de chargement presque horizontale/ouverte s'ouvrant en se dépliant sur le côté extérieur dudit carrosserie et vice versa, près duquelle la plate-forme de chargement (2) a des barrières de côté (3) sur les deux côtés de la plate-forme de chargement (2), et par laquelle opération la plate-forme de chargement (2), vue en position ouverte, a une bordure de plate-forme (15) sur le côté arrière, autrement dit le côté opposé/en parallèle dudit côté avant (21), sur lequel côté (15) et en parallèle à celui-ci (15), au moins en position ouverte de la plate-forme de chargement (2), une balustrade de sécurité est pourvue, par laquelle ladite balustrade de sécurité est une barrière de sécurité pouvant être bougée vers le haut (4) composée d'une barrière (5) qui est à ses deux extrémités connectée à un bras de support (1), et par laquelle opération lesdits bras (7), d'une vue du côté haut sur la plate-forme de chargement ouverte (2), sont situés sur et près des côtés respectifs de la plate-forme de chargement (2) en angles droits sur ladite barrière (5), et par laquelle opération lesdits bras (7) sur l'extrémité opposée à celle de leur connexion avec ladite barrière (5) sont connectés au moyen de charnières (8) et davantage sur le côté avant (21) de la plate-forme de chargement (2) comme position de ladite barrière (5) sur ladite partie d'élévation de l'hayon élévateur (1), tel que sur la plate-forme de chargement (2), et/ou sur les glissières respectives (9), et/ou sur les barrières de côté respectives (3) par laquelle opération ladite barrière (5) en position verticale fermée de la plate-forme de chargement (2), est située près de la plate-forme de chargement (2) et en position ouverte de la plate-forme de chargement (2) au moins en une position peut être tenue comme une barrière de sécurité ou balustrade et au moins dans une autre position peut être maintenue dans une position plus élevée afin de permettre l'introduction sur ladite plate-forme de chargement de marchandises et de personnes debout (2), se caractérisant en ce sens que les barrières latérales (23) des dites barrières de côté (3), pendant la fermeture de la plate-forme de chargement (2), se plient vers l'extérieur presque en parallèle sur et en direction de la plate-forme de chargement (2) et en parallèle l'une à l'autre (23), tournant dans leur connexion avec ses piliers debout et/ou avec sa glissière connectée (9), jusqu'à presque en position parallèle sur leur colonne respective (14), et par laquelle opération au moins un desdits bras (7) est maintenu ou supporté dans au moins un support (12), au moins sur une barrière de côté (3), par laquelle opération lesdits bras (7) dans la fermeture de ladite plate-forme de chargement (2) par ce mouvement de pliage des dites barrières de côté (3) peuvent être positionnés près de ladite plate-forme de chargement (2).

2. Un hayon élévateur (1), tel que déclaré dans la déclaration 1, dans lequel les supports (12) des bras respectifs (7) peuvent être bougés dans leur axe longitudinal par rapport aux barrières de côté (3) respectives.

3. Un hayon élévateur (1) tel que déclaré dans une quelconque des déclarations qui précèdent dans lequel les bras (7) de ladite barrière de sécurité (4) dans les deux charnières (8) effectuent une rotation d'environ 180°, action par laquelle ladite barrière (5) dans une position de fonctionnement est située sur le côté de ladite bordure de ladite plate-forme (15) et action par laquelle ladite barrière (5) pour le mouvement de fermeture de la plate-forme de chargement (2) peut être bougée en direction dudit côté avant (21), sur le côté des dites colonnes, et du côté avant (21) de la plate-forme de chargement (2).

4. Un hayon élévateur (1) tel que déclaré dans une quelconque des déclarations qui précèdent dans lequel ladite barrière de sécurité (4) a une barrière en équerre (6) située en parallèle sur ladite barrière (5), laquelle barrière en équerre (6) peut être bougée en un rayon autour de ladite barrière (5) de la position de transport vers la position de fonctionnement.

5. Un hayon élévateur (1) tel que déclaré dans une quelconque des déclarations qui précèdent dans lequel autour de ladite ouverture d'entrée (10) des étanchéités (18) sont pourvus contre lesquels la plate-forme de chargement (2) est scellée dans la position fermée, action par laquelle les bras (7) des dites barrières de sécurité (4), dans la vue de ladite ouverture d'entrée (10), sont situés à l'extérieur desdits étanchéités (18) autour de ladite ouverture d'entrée (10), et ladite barrière (5) est située à l'intérieur desdits étanchéités (18) autour de ladite ouverture d'entrée (10), par laquelle opération les parties de ladite barrière de sécurité (4), qui dépassent lesdits étanchéités (18), ont une espace et/ou un rétrécissement (17) n'étant pas un obstacle aux dits étanchéités (18), et par laquelle lesdits rétrécissement (17) s'emboîtent dans les espaces correspondants (19) dans ou sur la plate-forme de chargement (2) dans la zone où la plate-forme de chargement (2) touche lesdits étanchéités (18).
